# DEMANDE DE BREVET EUROPEEN

(11) **EP 0 828 229 A1**
(43) Date de publication de la demande: **11.03.1998**
(21) Numéro de dépôt: 96401495.5
(22) Date de dépôt: 08.07.1996
(51) Int. Cl.: G06K 19/067, G06K 7/10, G06K 7/08

(54) **Etiquette électronique analogique**

(71) Demandeur: F.D.I MATELEC SA, 94420 Le Plessis Trevise (FR)
(72) Inventeur: Fruneau, Patrick, 44 170 Jans (FR)

(57) **Abrégé**

L'invention repose sur la mémorisation et la transmission du contenu d'une étiquette électronique par des moyens analogique.

Ce moyens de mémorisation et de transmission sont plus particulièrement destinés à des étiquettes électroniques.

## Description

### DOMAINE TECHNIQUE DE L'INVENTION.

La présente invention est un procédé pour l'émission et la mémorisation du contenu d'une étiquette électronique qui sert à l'identification de son porteur. Ce système est particulièrement intéressant en ce qu'il permet à l'étiquette électronique de: mémoriser son identification par des moyens simples et transmettre son identification avec un débit élevé.

### ETAT DE L'ART.

Les méthodes employées dans ce domaine d'application utilisent des moyens numériques.

La mémorisation de l'identification de l'étiquette est faite par des mémoires. Ce type de mémorisation nécessite une logique de contrôle importante pour générer les signaux utiles à la mémoire et à l'émission de ses données sous forme série. La transmission de l'identification nécessite un temps de lecture par unité d'information binaire (bit).

### PRESENTATION DE L'INVENTION.

L'étiquette électronique présentée par l'invention utilise des moyens analogiques par paliers.

La mémorisation de l'identification de l'étiquette est faite par des paliers analogiques. La transmission est faite par des paliers analogiques proportionnels aux paliers analogiques mémorisés. Un temps de lecture fourni donc une unité d'information chiffrée (valeur du palier) ce qui réduit d'autant le temps de transmission.

Dans le cas de l'utilisation de deux paliers cette technique devient compatible avec les techniques décrites l'état de l'art.

### FORME D'INDUSTRIALISATION DE L'INVENTION.

La réalisation présentée en annexe utilise des unités d'informations sur cinq paliers et transmet l'identification de l'étiquette sur dix unités d'information. Un palier et une information de l'identification de l'étiquette sont utilisés comme début de message.

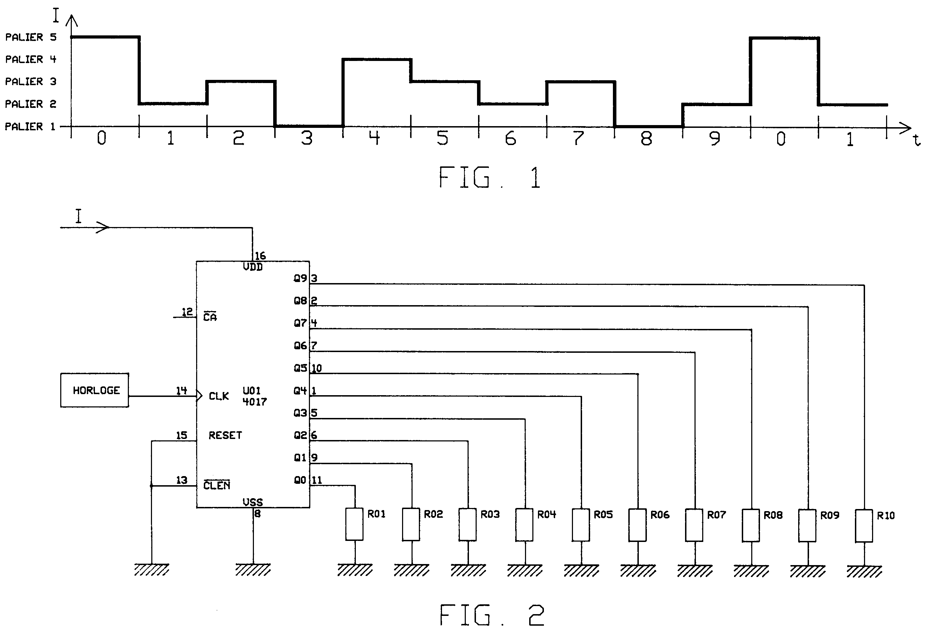

La figure 1 illustre le signal transmis, on remarque sur le temps 0 du message l'information de début d'identification qui utilise le palier 5. Les informations composant l'identification de l'étiquette électronique utilisent les temps 1 à 9 et les paliers 1 à 4.

La figure 2 illustre l'étiquette électronique qui permet de générer le signal de la figure 1. Les cinq paliers sont matérialisés par des résistances proportionnelles aux valeurs mémorisées. Les dix informations sont sélectionnées par un compteur décimal du type 4017. La transmission utilise une méthode d'absorptions de courant. Ces courants proportionnels aux cinq paliers mémorisés devront être analysés par le lecteur pour en déduire le contenu de l'étiquette électronique.

## Revendications

1. Procédé de mémorisation des données d'identification d'une étiquette électronique caractérisé en ce qu'il utilise une forme analogique par paliers.

2. Procédé de mémorisation des données d'identification d'une étiquette électronique selon la revendication 1 caractérisé en ce qu'il utilise des résistances pour mémoriser les valeurs des paliers analogiques utilisés pour l'identification de l'étiquette.

3. Procédé de transmission des données d'identification d'une étiquette électronique caractérisé en ce qu'il utilise une forme analogique par paliers.

4. Procédé de mémorisation des données d'identification d'une étiquette électronique selon la revendication 2 caractérisé en ce qu'il utilise la technique d'absorption de courant par paliers pour la transmission des données d'identification de l'étiquette électronique.
